# EUROPEAN PATENT APPLICATION

(11) **EP 1 157 881 A2**
(43) Date of publication of application: **28.11.2001**
(21) Application number: 01201502.0
(22) Date of filing: 25.04.2001
(51) Int. Cl.: B60N 2/28

(54) **Coupling system as well as a baby seat and a coupling element suitable for use with such a coupling system**

(30) Priority: 26.04.2000 NL 1015021
(71) Applicant: Maxi Miliaan B.V., NL-5705 DG Helmond (NL)
(72) Inventor: Siewertsen, Adriaan, 5691 MD Son (NL)
(74) Representative: Dohmen, Johannes Maria Gerardus

(57) **Abstract**

A coupling system which is suitable for connecting a bucket-like baby seat to a vehicle seat comprising a seat portion and a backrest by means of a coupling element. The coupling element can be detachably connected to the vehicle seat, whilst the baby seat can be detachably connected to the coupling element. In use, the baby seat can be positioned on the seat portion on a side of the coupling element remote from the backrest, after which the baby seat can be tilted with respect to the coupling element about an axis extending parallel to the backrest and the seat portion so as to connect the baby seat to the coupling element.

## Description

The invention relates to a coupling system which is suitable for connecting a bucket-like baby seat to a vehicle seat comprising a seat portion and a backrest by means of a coupling element, wherein said coupling element can be detachably connected to the vehicle seat, whilst the baby seat can be detachably connected to the coupling element.

The invention furthermore relates to a baby seat and a coupling element suitable for use with such a coupling system.

With a coupling system of this kind, which is known per se, the coupling element can be detachably connected to a vehicle seat. The baby seat, which is suitable for babies until the age of about nine months weighing up to about 13 kg, can be connected to the coupling element, so that a firm connection between the baby seat and the vehicle is obtained. Such a baby seat is usually placed into the vehicle or removed therefrom while a baby is present therein. Outside the vehicle, the baby seat is used as a separate seat or placed onto a mobile chassis, such as a stroller. The baby seat is fitted with a carrying handle, which is pivotally connected to the baby seat, for lifting the baby seat out of the vehicle and carrying it outside the vehicle.

With a coupling system which is known per se, the coupling element comprises a carrier plate and two flanges extending transversely the carrier plate. The flanges are provided with recesses on sides remote from the carrier plate, into which pins connected to ends of the carrying handle can be positioned. When the baby seat is to be connected to the coupling element, the baby seat must be lifted over at least one flange, after which it can be positioned between the flanges. Since this operation must be carried out with a coupling element which is already positioned in the vehicle, it is relatively difficult to connect the baby seat to the coupling element in this manner.

The object of the invention is to provide a coupling system which makes it possible to connect the baby seat to the coupling element and disconnect it therefrom in a relatively simple manner.

This objective is accomplished with the coupling system according to the invention in that said coupling element comprises connecting members disposed near said backrest and said seat portion, which can be connected to connecting elements which are disposed near the front side and the bottom side of the baby seat facing towards said backrest and said seat portion, respectively, wherein the baby seat can be positioned on the seat portion in use, on a side of the coupling element remote from the backrest, after which the baby seat can be tilted with respect to the coupling element about an axis extending parallel to the backrest and the seat portion so as to interconnect the connecting members and the connecting elements.

Since the connecting elements and the connecting members are located near the front side and the bottom side of the baby seat rather than near the upper side and the centre of the baby seat, the need to lift the baby seat over projecting elements is substantially eliminated. With the coupling system according to the invention, the baby seat can be simply positioned opposite the coupling element on the seat portion of the vehicle seat, and subsequently be moved towards the coupling element. Then the connecting elements of the baby seat can be moved into engagement with the connecting members of the coupling element by tilting the baby seat with respect to the coupling element. In this manner a firm connection between the baby seat and the coupling element is obtained.

Since said connecting members can moreover be provided relatively close to the backrest and the seat portion, the coupling element can be of relatively compact construction. This is important in particular when it is desired to use the vehicle seat for a grown-up person temporarily and store the coupling element elsewhere in the vehicle during that time.

It is noted that EP-A1-0 545 185 discloses a coupling system wherein a baby seat is connected, by means of a safety belt, to a coupling element which is connected the vehicle. To that end the baby seat comprises a groove-like portion at the bottom side, which can be positioned over a guide rail of the coupling element. The baby seat is thereby positioned between two flanges of the coupling element. One drawback of this prior art system is that it is necessary to lift the baby seat over at least one flange in order to position it between the flanges and hook a hook-shaped element into a bracket that is present in the coupling element. In addition, the coupling system is relatively voluminous, due to the presence of the two flanges.

A similar drawback obtains to a larger degree with regard to the coupling system that is known from DE-A1-40.31.718, which comprises relatively high vertical brackets.

With the coupling system according to the invention, on the other hand, the baby seat can be moved into engagement with the connecting members of the coupling element by means of a simple tilting movement. In this manner a simple method of connecting the baby seat to the coupling element is obtained.

The invention will now be explained in more detail with reference to the drawings, wherein:
Figure 1 shows a first embodiment of a coupling element according to the invention;
Figure 2 shows a second embodiment of a coupling element according to the invention;
Figure 3 is a perspective view of a baby seat according to the invention;
Figure 4 is a cross-sectional view of a part of the baby seat that is shown in Figure 3;
Figures 5 and 6 show the manner of attaching the baby seat of Figure 3 to the coupling element of Figure 1;
Figure 7 shows another embodiment of a coupling system according to the invention;
Figure 8 shows yet another embodiment of a coupling system according to the invention.

Parts corresponding to each other are indicated by the same numerals in the figures.

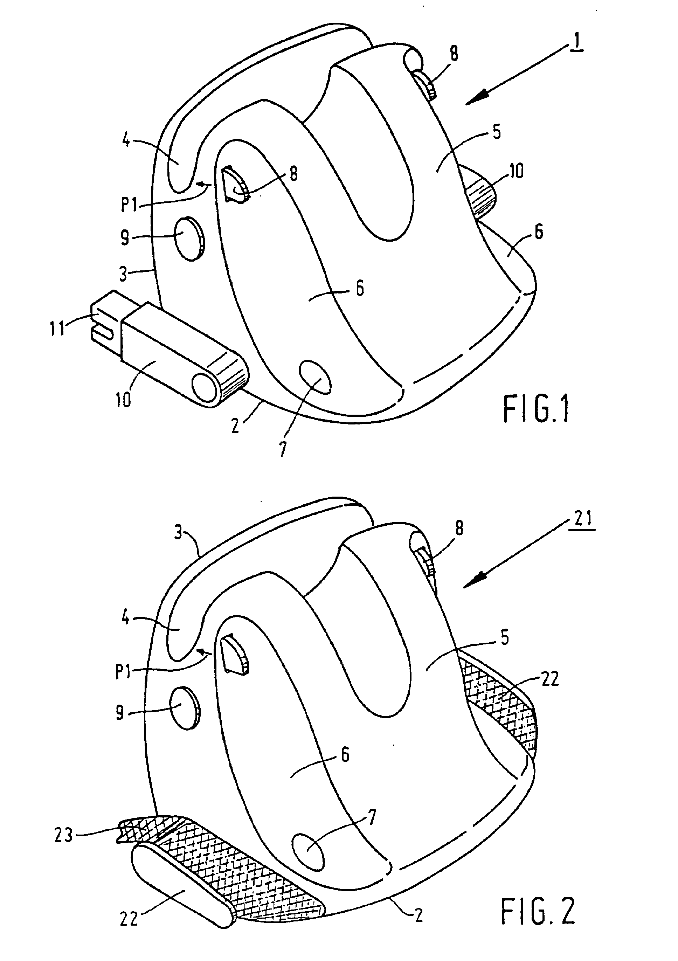

Figure 1 shows a coupling element 1 according to the invention, which comprises a substantially horizontal portion 2 and a vertical portion 3, which extends substantially transversely thereto. Vertical portion 3 is provided with an elongated groove 4 on a side remote from horizontal portion 2. Groove 4 is open on a side remote from horizontal portion 2. Coupling element 1 furthermore comprises a bridge portion 5, which extends between ends of the horizontal portion 2 and vertical portion 3 facing away from each other. Bridge portion 5 is bounded by recessed portions 6 on both longitudinal sides. Disposed in said recessed portions 6 are cam-shaped connecting members 7, which extend upwards from horizontal portion 2.

Coupling element 1 furthermore comprises lips 8 disposed in said recessed portions 6, which lips can be moved against spring force in the direction indicated by arrow P1, towards the vertical portion 3. The lips can be jointly moved in the direction indicated by arrow P1 by means of a operating knob 9.

Present on either side of coupling element 1, near horizontal portion 2, are arms 10 which are pivotally connected to the horizontal portion, which arms each comprise a hook-shaped element 11 on a side remote from horizontal portion 2.

Figure 2 shows a second embodiment of a coupling element 21 according to the invention, which is different from the coupling element 1 that is shown in Figure 1 in that it comprises arms 22 extending from horizontal portion 2, which function to guide a belt 23 that is connected to a vehicle. The other parts of coupling element 21 correspond to those of coupling element 1.

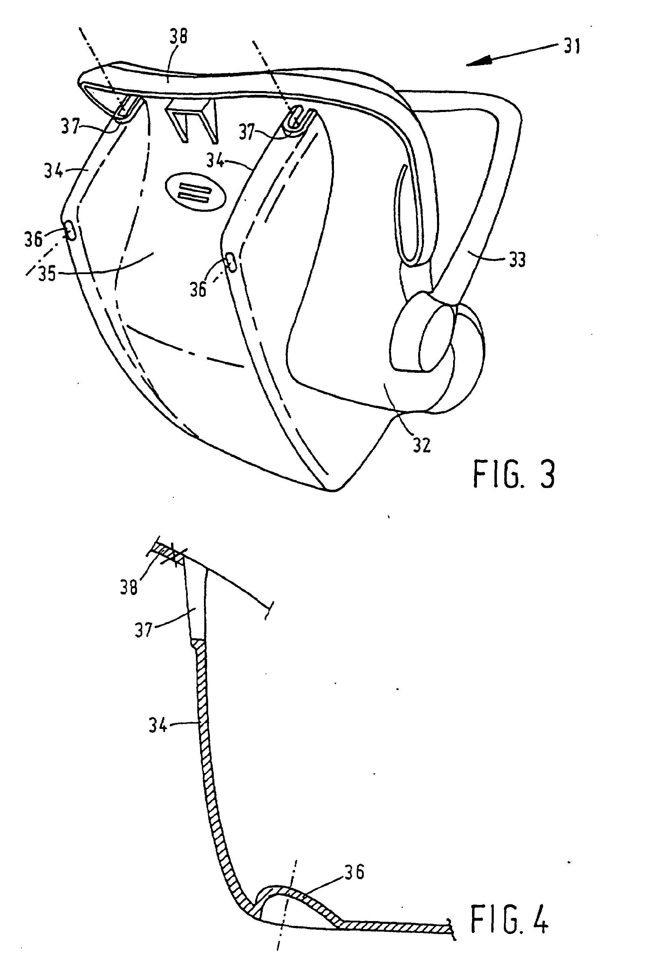

Figures 3 and 4 are a perspective view and a cross-sectional view, respectively, of a part of a baby seat 31 according to the invention. Baby seat 31 comprises a bucket 32 and a carrying handle 33, which is pivotally connected thereto. Bucket 32 comprises two flange-like side walls 34 on a front side and a bottom side, between which a wall portion 35 extends. In use, the legs of the baby that is present in baby seat 31 are supported on said wall portion 35. The flange-like side walls 34 each include a recess 36 at their bottom sides, and a U-shaped slot 37 located near the front side of the baby seat 31 at their upper sides. Near its front side, bucket 32 is furthermore provided with an edge 38 extending beyond slots 37, which edge extends at least between the walls 34 in the direction of the bottom side of bucket 32.

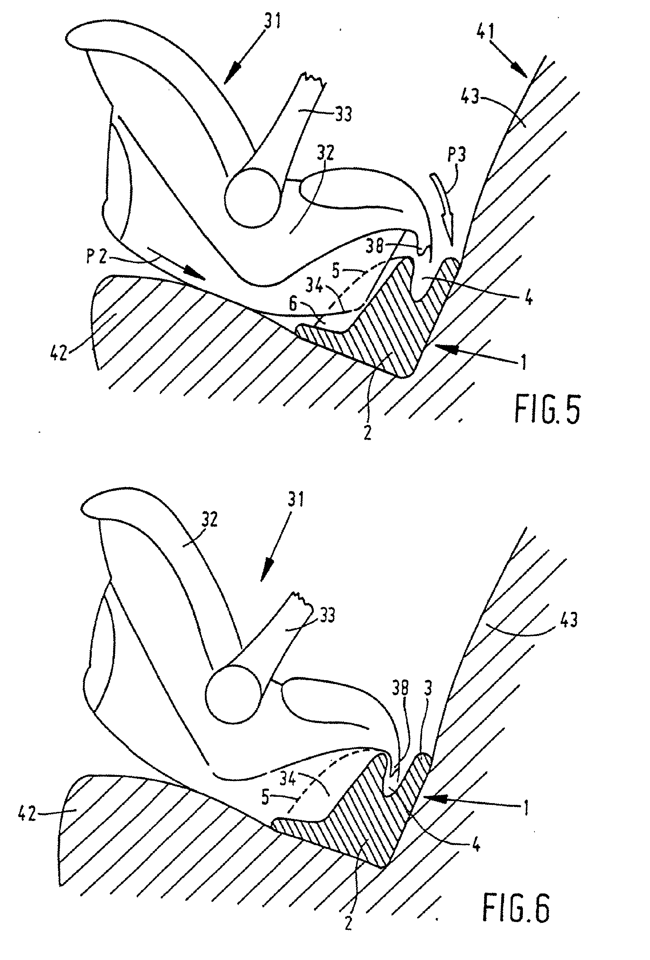

Figures 5 and 6 show the manner in which the baby seat 31 is connected to a vehicle seat 41 of a vehicle (not shown) by means of coupling element 1. Vehicle seat 41 comprises a seat portion 42, which is known per se, and a backrest 43 connected thereto.

Coupling element 1 is connected to connecting brackets (not shown) disposed between backrest 43 and seat portion 42 by means of hooks 11. This manner of connecting a construction to a vehicle is known, for example from the applicant's Dutch patent no. 1009912, and consequently it will not be explained in more detail herein.

Once coupling element 1 is connected to the vehicle seat 41, baby seat 31 is positioned with its underside on seat portion 42, opposite the coupling element 1. Then the baby seat 31 is moved across seat portion 42, in the direction indicated by arrow P2, towards coupling element 1, whereby the side walls 34 are positioned in the recessed portions 6 on either side of bridge portion 5. Baby seat 31 is thereby held in such a position with respect to coupling element 1 that the edge 38 can readily be moved over bridge portion 5. After the baby seat 31 has been moved to the position that is shown in Figure 5, baby seat 31 is tilted in the direction indicated by arrow P3 about an axis extending parallel to the backrest and the seat portion, whereby the recesses 36 present at the bottom side of the side walls 3 are positioned over the cam-shaped connecting members 7. At the same time, walls 34 push the lips 8 in the direction indicated by arrow P1 against spring force. As soon as slots 37 are positioned opposite lips 8, however, lips 8 will be moved into slots 37 in the direction opposed to the direction indicated by arrow P1 under the influence of the spring force. Baby seat 31 is now firmly connected to coupling element 1. In addition, after bucket 32 has tilted in the direction indicated by arrow P3, the edge 38 will be positioned in groove 4 (see Figure 6). If a relatively large force is exerted on baby seat 31 in a direction away from backrest 43 in case of a collision of the vehicle, the presence of edge 38 in groove 4 will effectively help prevent the baby seat 31 from moving undesirably with respect to coupling element 1.

The coupling element 21 that is shown in Figure 2 is interlocked with baby seat 31 in a similar manner. The only difference is that the coupling element 21 is fixed by means of belts that are present in the vehicle rather than by means of fixing brackets that are present therein.

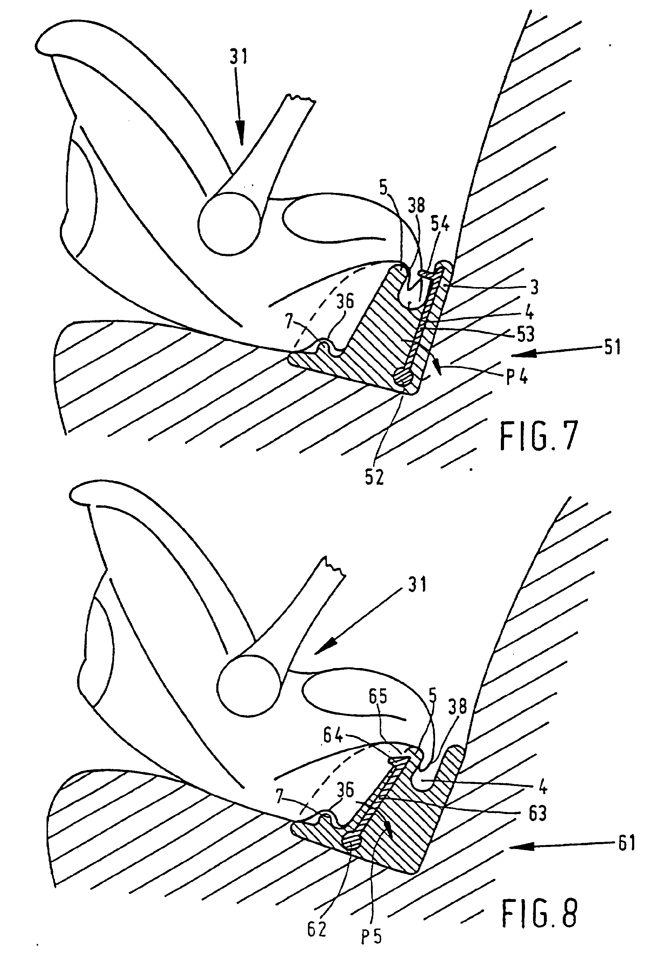

Figure 7 shows another embodiment of a coupling element 51 according to the invention, wherein an arm 53, which is capable of pivoting movement about a pin 52, is disposed in vertical portion 3, which arm includes a lip 54 on a side remote from pin 52, which lips can be moved into engagement with the upper side of the edge 38 of baby seat 31. Arm 53 can be pivoted in the direction indicated by arrow P4 against spring force. In the embodiment that is shown in Figure 7, lips 54 extend into groove 4.

Figure 8 shows yet another embodiment of a coupling element 61 according to the invention, which includes an arm 63 which is capable of pivoting movement about a pin 62, which arm includes lips 64 on a side remote from pin 62, which lips can be moved to engage in recesses 65 formed in the wall 34 of baby seat 31. Lips 64 are positioned in bridge portion 5 thereby.

When baby seat 31 is to be detached from coupling element 1, 21, operating knob 9 is pressed, after which the baby seat 31 is tilted in the direction opposed to the direction indicated by arrow P3 and moved off coupling element 1, 21.

## Claims

1. A coupling system which is suitable for connecting a bucket-like baby seat to a vehicle seat comprising a seat portion and a backrest by means of a coupling element, wherein said coupling element can be detachably connected to the vehicle seat, whilst the baby seat can be detachably connected to the coupling element, **characterized in that** said coupling element comprises connecting members disposed near said backrest and said seat portion, which can be connected to connecting elements which are disposed near the front side and the bottom side of the baby seat facing towards said backrest and said seat portion, respectively, wherein the baby seat can be positioned on the seat portion in use, on a side of the coupling element remote from the backrest, after which the baby seat can be tilted with respect to the coupling element about an axis extending parallel to the backrest and the seat portion so as to interconnect the connecting members and the connecting elements.

2. A coupling system according to claim 1, **characterized in that** said coupling element includes a groove extending parallel to said axis, which is open on a side remote from said seat portion, into which a flange extending towards the seat portion, which is disposed near the front side of the baby seat, can be positioned.

3. A coupling system according to claim 1 or 2, **characterized in that** the baby seat comprises a connecting element including at least one recess near its bottom side, into which a cam-shaped connecting member of the coupling element can be positioned.

4. A coupling system according to any one of the preceding claims, **characterized in that** the baby seat comprises a connecting element including at least one recess near its front side, into which a cam-shaped connecting member of the coupling element can be positioned.

5. A coupling system according to claim 3 or 4, **characterized in that** said cam-shaped connecting member can be moved against spring force in a direction towards the coupling element.

6. A coupling system according to any one of the preceding claims, **characterized in that** the baby seat comprises two side walls extending substantially transversely to said seat portion and said backrest, wherein said coupling element comprises a bridge portion that can be positioned between said side walls.

7. A coupling system according to any one of the preceding claims, **characterized in that** said coupling element can be connected to the vehicle seat by means of a belt that is connected to the vehicle.

8. A coupling system according to any one of the preceding claims 1 - 6, **characterized in that** said vehicle is fitted with connecting brackets, whereby said coupling element is fitted with hooks disposed on either side of the coupling element, which can be hooked into said connecting brackets.

9. A baby seat suitable for use with a coupling system according to any one of the preceding claims.

10. A coupling element suitable for use with a coupling system according to any one of the preceding claims 1 - 8.
